# EUROPÄISCHE PATENTSCHRIFT

(11) **EP 0 776 727 B1**
(45) Veröffentlichungstag und Bekanntmachung des Hinweises auf die Patenterteilung: **12.09.2001**
(21) Anmeldenummer: 96118084.1
(22) Anmeldetag: 12.11.1996
(51) Int. Cl.: B23Q 1/00

(54) **Rotierendes Schaftwerkzeug**
Rotating shaft tool
Outil rotatif à tige cylindrique

(30) Priorität: 29.11.1995 DE 19544556
(43) Veröffentlichungstag der Anmeldung: 04.06.1997
(73) Patentinhaber: August Beck GmbH & Co., D-72474 Winterlingen (DE)
(72) Erfinder: Schanz, Gerhard, 72387 Burladingen (DE)
(74) Vertreter: Maser, Jochen, Dipl.-Ing.

(56) Entgegenhaltungen:
- EP-A- 0 556 801
- EP-A- 0 579 371
- DE-A- 4 003 257
- DE-B- 1 291 170
- FR-A- 2 460 172

## Beschreibung

Die Erfindung betrifft ein rotierendes Schaftwerkzeug gemäß der im Oberbegriff des Anspruchs 1 angegebenen Art.

Aus der EP 0 556 801 A1 ist ein rotierendes Schaftwerkzeug bekanntgeworden, das aus einem zylindrischen Schaft und einem auf dem Schaft aufgebrachten

Schneidkopf besteht. In dem als Formkopf ausgebildeten Schneidkopf sind Spannuten eingebracht, dem sich ein Nutenauslaufbereich anschließt. Konzentrisch zum zylindrischen Schaft ist in diesem ein Hauptkanal für Kühl-/Schmiermittel vorgesehen, von dem in seinem Endbereich bei dem Schneidkopf mindestens zwei Zweigkanäle von dem Hauptkanal senkrecht nach außen führen und dort jeweils eine Mündung bilden. Diese sind jeweils in dem Nutauslaufbereich angeordnet, der von einer Hülse umgeben ist. Die Hülse erstreckt sich dabei von dem Schaft bis zum Nutauslaufbereich des Schneidkopfes.

Bei einem derartigen rotierenden Schaftwerkzeug ist problematisch, daß insbesondere beim Ausbilden von kleinen Durchmessern, wie beispielsweise unter 6,5 mm, eine derartige Ausführungsform den erforderlichen Kräften nicht standhalten kann, da die wenigstens zwei senkrecht zum Hauptkanal angeordneten Bohrungen den Querschnitt stark schwächen, so daß die auftretenden Torsions- und auch Biegespannungen nicht aufgenommen werden können.

Des weiteren weisen derartige Ausführungsformen von rotierenden Schaftwerkzeugen den Nachteil auf, daß eine zweimalige Umlenkung um 90° des Kühl/Schmiermittels erforderlich ist, bevor dieses in den Spanraum des Schneidkopfes gelangen kann. Bei einer konventionellen Kühlschmierung wird das Kühl-/Schmiermittel unter hohem Druck durch das Schaftwerkzeug gedrückt und dem Werkstück zugeführt. Aufgrund der rechtwinkligen Umlenkungen, die sehr strömungsungünstig sind, ist erforderlich, daß der Überdruck noch höher ausgelegt werden muß, damit mit einem genügenden Restdruck das Kühl-/Schmiermittel durch das Schaftwerkzeug hindurchgeführt werden kann.

Des weiteren ist aus der DE-B 12 91 170 ein Schaftwerkzeug bekannt, welches im Unterschied zum Schaftwerkzeug gemäß der EP 0 556 801 A1 Zweigkanäle aufweist mit einer zweimaligen Umlenkung des Kühl-/Schmiermittels um 135° aufweist. Die zuvor genannten Nachteile sind auch bei diesem Schaftwerkzeug gegeben.

Des weiteren weisen derartige Ausführungsformen eines rotierenden Schaftwerkzeuges den Nachteil auf, daß eine Minimalmengenschmierung nicht ermöglicht ist. Bei der Minimalmengenschmierung wird dem Schneidkopf in etwa 0,5 bis 5 ml pro Stunde Kühl-/Schmiermittel zugeführt. Um derartige geringe Flüssigkeitsdurchsätze zu erzielen, wird mit einem geringen Überdruck von 2 bis 3 bar ein Nebel gebildet, der mit Kühl-/Schmiermittelpartikeln angereichert ist. Durch die Ausbildung von Umlenkungen und den sich dadurch ergebenden Abkantungen kann der Nebel an den Umlenkungen auskondensieren, wodurch dann eine Tröpfchenbildung erfolgen kann. Dies bedeutet, daß es zu einer ungleichmäßigen Schmierung kommen kann, bei der sich plötzlich ein Tropfen von einer Abkantung löst und dem Spanraum zugeführt wird, während in der dazwischenliegenden Zeit kein Kühl-/Schmiermittel in den Spanraum gelangen kann.

Der Erfindung liegt deshalb die Aufgabe zugrunde, ein rotierendes Schaftwerkzeug gemäß der im Oberbegriff des Anspruchs 1 angegebenen Art zu schaffen, das eine strömungsgünstige Ausgestaltung von Kanälen für die Zuführung von Kühl-/Schmier- mittel aufweist, die sowohl eine konventionellen Kühlschmierung als auch eine Minimalmengenschmierung ermöglicht und eine hohe Festigkeit auch bei kleinerem Durchmesser der Schaftwerkzeuge aufweist.

Diese Aufgabe wird erfindungsgemäß dadurch gelöst, daß der zumindest eine Zuführkanal im wesentlichen achsparallel zur Längsmittelachse des Schaftes und des Schneidkopfes vorgesehen ist, und der Übergang von dem Hauptkanal zum Zuführkanal besteht aus einem zwischen einem zylindrischen Körper des Schneidkopfes und der Hülse gebildeten Strömungskanal, wobei der Endbereich des zylindrischen Körpers ein in den Hauptkanal ragendes freies Ende aufweist, das kegelförmig oder kugelförmig ausgebildet ist und der Übergang von dem Zuführkanal zum Nutenauslaufbereich besteht aus einem ein der Hülse zugeordneter Auslaufbereich des Strömungskanals, wobei der Auslaufbereich unter einem spitzen Winkel zur Mantelfläche des zylindrischen Körpers angeordnet ist oder einen fließenden, vorzugsweise gerundeten Abschnitt zwischen Auslaufbereich und Mantelfläche des zylindrischen Körpers aufweist, so daß beide Übergänge nahezu absatzfrei sind.

Durch die im wesentlichen achsparallele Anordnung des zumindest einen Zuführkanals zur Längsmittelachse des Schaftwerkzeuges kann eine Zuführung des Kühl-/Schmier- mittels von einem Hauptkanal zu den Spanräumen des Schneidkopfes gegeben sein, ohne daß zumindest eine Umlenkung bzw. Abkantung in größerem Maße vorgesehen ist. Dadurch können sehr günstige

Strömungsbedingungen gegeben sein. Das Kühlmittel kann das rotierende Schaftwerkzeug ohne eine störende Beeinflussung von scharfkantigen Umlenkungen oder Abkantungen durchströmen, so daß das Kühl-/Schmiermittel im wesentlichen mit einer laminaren Strömung zum Schneidkopf gelangen kann. Diese strömungsgünstige Ausgestaltung der Zuführung von Kühl-/Schmiermittel ist insbesondere bei der Minimalmengenschmierung von Bedeutung, so daß eine Auskondensierung des rotierenden Schaftwerkzeuges in einer Abkantung oder strömungsbedingten Toträumen des Kanales ausbleiben kann.

Des weiteren weist die erfindungsgemäße Ausgestaltung und Anordung eines Strömungskanals den Vorteil auf, daß auch ein rotierendes Schaftwerkzeug herstellbar ist, dessen Schneidkopf einen Durchmesser von beispielsweise weniger als 6,5 mm aufweisen kann. Durch die Anordnung der im wesentlichen achsparallel zur Längsmittelachse des Schaftwerkzeuges verlaufenden Zuführkanäle können auch bei kleinen Durchmessern der Schaftwerkzeuge Querschnitte im Schaftbereich gegeben sein, die die auftretenden Beanspruchungen in Form von beispielsweise Torsions- und Biegespannungen aufnehmen können.

Des weiteren weist die erfindungsgemäße Ausgestaltung des rotierenden Schaftwerkzeuges den Vorteil auf, daß eine Kühl-/Schmiermittelzuführung gegeben ist, die sich be sämtlichen Werkzeugen einsetzen läßt, für die eine innere Kühlmittelzufuhr vorgesehen ist. Dies kann beispielsweise bei Ein- oder Mehrschneiden-Reibahlen, bei Bohrern, bei Bohrstangen, bei Fräsern und Senkern, bei Gewindeschneider und Gewindefurcher oder dergleichen vorgesehen sein. Dabei ist unabhängig, ob die Schneiden einstückig mit dem Schneidkopf ausgebildet sind oder durch eingesetzte Schneidplatten vorgesehen sind.

In den weiteren Unteransprüchen sind vorteilhafte Ausgestaltungen und Weiterbildungen der Erfindung angegeben.

In der Zeichnung und der nachfolgenden Beschreibung ist ein bevorzugtes Ausführungsbeispiel der Erfindung dargestellt. Es zeigen:
- Fig. 1: eine schematische Seitenansicht eines rotierenden Schaftwerkzeuges und
- Fig. 2: eine Mitansicht des rotierenden Schaftwerkzeuges gemäß der Linie II-II in Fig. 1.

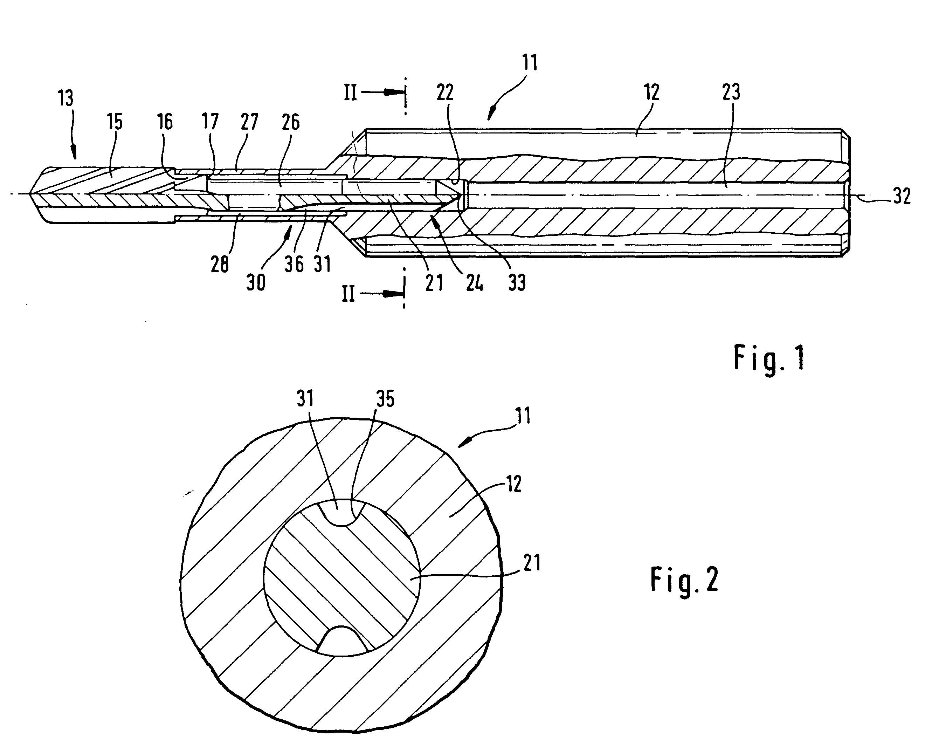

In den Fig. 1 und 2 ist ein rotierendes Schaftwerkzeug 11 dargestellt, das einen zylindrischen Schaft 12 sowie einen in den zylindrischen Schaft 12 eingesetzten Schneidkopf 13 aufweist. Der im folgenden beschriebene Schneidkopf 13 ist als Formkopf aus einem Schneidmaterial hergestellt. Alternativ kann ein Schneidkopf vorgesehen sein, der aus einem weniger hochwertigen Material ausgebildet ist, an dem eingesetzte Schneidplatten vorgesehen sind. Diese Ausführungsform ist besonders vorteilhaft bei Schneidköpfen mit größerem Durchmesser, beispielsweise ab 15 mm.

Der Schneidkopf 13 weist Spannuten 15 auf, an die sich ein Nutenauslaufbereich 16 der Spannuten 15 anschließt. Der Übergang von den Spannuten 15 zu dem Auslaufbereich 16 der Spannuten 15 wird durch den Absatz 17 der Nutenwandung gebildet, wobei der Auslaufbereich 16 der Spannuten 15 ausschließlich in den Schneidkopf 13 eingebracht ist.

An den Auslaufbereich 16 der Spannuten 15 schließt sich der zylindrische Körper 21 mit einem gegenüber dem Nutenauslaufbereich 16 geringeren Durchmesser an. Der zylindrische Körper 21 ist in einer Bohrung 22 des Schaftes 12 angeordnet. Diese Bohrung ist geringfügig größer gegenüber einem den Schaft 12 in Achslängsrichtung durchdringenden Hauptkanal 23 vorgesehen. Der Hauptkanal 23 und die Bohrung 22 können im Durchmesser auch gleich groß ausgebildet sein. Der Endbereich 24 des zylindrischen Körpers 21 ist mit der Bohrung 22 kraft- und/oder formschlüssig verbunden. Vorteilhafterweise ist zwischen dem Endbereich 24 des zylindrischen Körpers 21 und dem Schaft 12 eine Preßpassung vorgesehen, wie nachfolgend noch beschrieben wird.

Zwischen dem Nutenauslaufbereich 16 und dem Hauptkanal 23 des Schaftwerkzeugs 11 ist zumindest ein Zuführkanal 30 vorgesehen. Dieser kann - wie nachfolgend beschrieben - unterschiedlich ausgebildet sein.

Der zylindrische Körper 21 des Schneidkopfs 13 weist einen mittleren Bereich 26 auf, der von einer Hülse 27 überdeckt wird. Die Hülse 27 ist einstückig mit dem Schaft 12 verbunden und greift an dessen freien Ende an dem Auslaufbereich 16 der Spannuten 15 an. Der Absatz 17 begrenzt zum Schneidkopf 13 hin einen durch die Hülse 27 gebildeten Ringspalt 28.

Der Endbereich 24 des zylindrischen Körpers 21 von dem eingesetzten Schneidkopf 13 weist einen Strömungskanal 31 auf, der achsparallel zu einer Längsmittelachse 32 des Schaftwerkzeugs 11 verläuft. Der Strömungskanal 31 ist im Querschnitt gesehen als eine V-förmige Längsnut 35 in den zylindrischen Körper 21 eingearbeitet, wobei dessen Nutgrund bevorzugt als Kreisbogen ausgebildet ist. Die geradlinig verlaufenden Schenkel der V-förmigen Längsnut 35 können einen Winkel von 90°± 30 %, vorzugsweise von in etwa 90° einschließen. Die V-förmige Längsnut 35 weist im Verhältnis zum Durchmesser des Endbereiches 24 eine geringe Vertiefung auf, so daß ein relativ großer Kerndurchmesser erhalten bleiben kann, der für eine hohe Festigkeit sorgt, um die auftretenden Torsions- und Biegespannungen bzw. Beanspruchungen aufnehmen zu können.

Im Ausführungsbeispiel sind zwei um 180° zueinander versetzt angeordnete Strömungskanäle 31 vorgesehen. Durch die kegelspitzförmige Ausgestaltung des freien Endes 33 vom zylindrischen Körper 21 kann ein strömungsgünstiger Übergang von dem Hauptkanal 23 in die Strömungskanäle 31 gegeben sein. Am Ende der Strömungskanäle 31 ist ein Auslaufbereich 36 vorgesehen, der einen fließenden Übergang zu dem Ringspalt 28 bildet. Der Grund des Strömungskanales 31 kann dabei in einen spitzen Winkel zu der Mantelfläche des Ringspaltes 28 übergehen, so daß ein Übergang von dem Strömungskanal 31 in den Ringspalt 28 gegeben ist, der eine nahezu laminare Strömung aufrechterhält.

Der Strömungskanal 31 wird durch einen Schleifvorgang in den zylindrischen Körper 31 eingebracht. Dadurch erweist sich die oben beschriebene Geometrie der Längsnut 35 als besonders vorteilhaft. Des weiteren können ebenso davon abweichende Geometrien bzw. Querschnitte geeignet sein. Dies ist erforderlich, da der Schneidkopf 13 zumeist aus höherwertigem Material hergestellt ist, bei dem ein Fräsen nicht möglich ist.

Dies weist jedoch den Vorteil auf, daß eine Längsnut 35 ausgebildet werden kann, die eine hohe Oberflächengüte aufweist, so daß die Reibung des durchströmenden Kühl-/Schmiermittels verringert werden kann. Dadurch wird wiederum die Strömungsgeschwindigkeit zumindest nicht negativ beeinflußt.

Die erfindungsgemäße Anordnung und Ausgestaltung des Strömungskanals 31 zwischen dem Hauptkanal 23 und dem Ringspalt 28 weist insbesondere bei Schaftwerkzeugen 11 mit einem Durchmesser von kleiner als 6,5 mm den Vorteil auf, daß sie eine hohe Festigkeit und Steifigkeit haben. Des weiteren weist diese erfindungsgemäße Ausgestaltung den Vorteil auf, daß sowohl eine konventionellen Kühlschmierung als auch eine Minimalmengenschmierung gegeben sein kann. Als Kühl-/Schmiermittel bei der Minimalmengenschmierung kann beispielsweise ein fein disperser fettalkoholhaltiger Nebel das Schaftwerkzeug 11 durchströmen. Durch die nahezu geradlinige Ausgestaltung der Zuführung des Kühl-/Schmiermittels ohne Umlenkungen oder Abkantungen kann vermieden werden, daß an den Kanten der Umlenkungen oder Abkantungen bzw. in dessen Toträumen der Nebel auskondensieren kann, so daß anschließend das Kühl-/Schmiermittel tropfenförmig den Spannuten 15 zugeführt wird. Bei dieser Ausführungsform ist somit der Zuführkanal 30 durch einen Strömungskanal 31 und einen Ringabschnitt 28 gebildet.

Eine alternative Ausführungsform des Schaftwerkzeuges 11 sieht vor, daß bei einem Schneidkopf 13 mit vier Spanräumen ein zylindrischer Körper 21 mit vier Längsnuten 35 vorgesehen ist, die vier Zuführkanäle 30 aufweisen. Die Zuführkanäle 30 sind nur durch die Strömungskanäle 31 ausgebildet und können direkt in den Auslaufbereich 16 der Spannuten 15 übergehen, so daß für jede Spannut 15 ein Strömungskanal 31 vorgesehen ist. Die Anzahl der Zuführkanäle 30 kann an die Anzahl der Spannuten 15 angepaßt werden.

Das Schaftwerkzeug 11 gemäß Fig. 1 ist zweiteilig ausgebildet. Zum Einsetzen des Schneidkopfes 13 in den Schaft 12 wird der Schaft 12 auf einen Temperaturbereich zwischen 300 und 800° erwärmt, so daß sich die Innendurchmesser der Hülse 27 und der Bohrung 22 vergrößern kann. Anschließend wird der Schneidkopf 13 eingesetzt, so daß die Hülse 27 den Nutauslaufbereich 16 zumindest teilweise überdeckt und der Endbereich 24 des zylindrischen Körpers 21 in der Bohrung 22 positioniert ist. Nach Abkühlen des Schaftes 12 schrumpft dieser auf den Schneidkopf 13 auf. Alternativ kann vorgesehen sein, daß weitere kraft- und/oder formschlüssige Verbindungen gegeben sind. Darüber hinaus können auch stoffschlüssige Verbindungen durch Kleben oder Löten, wie z.B. Weich- oder Hartlöten oder dergleichen vorgesehen sein.

Durch die erfindungsgemäße Ausgestaltung der Zuführkanäle 30, insbesondere der Strömungskanäle 31, können sowohl der Schaft 12 als auch der Schneidkopf 13 mit einfachen Geometrien ausgebildet sein, die eine kostengünstige Herstellung ermöglichen.

Nach einer weiteren alternativen Ausführungsform des Schaftwerkzeuges 11 kann vorgesehen sein, daß die Hülse 27 getrennt von dem Schaft 12 herstellbar ist und zu diesem über eine kraft- und/oder formschlüssige als auch über eine stoffschlüssige Verbindung anordenbar ist.

Die einfache geometrische Ausgestaltung des Schaftes 12 als auch des Schneidkopfes 13 ist dadurch ermöglicht, daß ihr beim Zusammensetzen der beiden Teile zu einem Schaftwerkzeug 11 die Strömungskanäle 31 ausgebildet werden. Dadurch können durch einen einfachen Schleifvorgang die Längsnuten 35 in einen Schneidkopf 13 eingebracht werden, der vorzugsweise aus HSS, Hartmetall oder aus Cermet besteht.

Die Herstellung der Strömungskanäle 31 ist bei Schneidköpfen mit eingesetzten Schneidplatten dadurch vereinfacht, da der Formkopf dann zumeist aus einem Nicht-Schneidmaterial ausgebildet ist, so daß hier eine Fräsbearbeitung der Nuten möglich ist. Ein in Fig. 1 und 2 beschriebenes Schaftwerkzeug 11 eignet sich insbesondere zum Reiben. Dabei kann das Schaftwerkzeug 11 eine Drehgeschwindigkeit bis über 10.000 U/min aufweisen. Des weiteren kann die erfindungsgemäße Ausgestaltung der Kühlmittelzufuhr für rotierende Werkzeuge vorgesehen sein, die einen Schneidkopfdurchmesser von größer als 2,5 mm aufweisen.

## Patentansprüche

1. Rotierendes Schaftwerkzeug mit einem Schaft (12), in dem zumindest ein sich in Längsrichtung erstreckender Hauptkanal (23) für Kühl-/Schmiermittel vorgesehen ist, mit einem mit dem Schaft (12) verbundenen Schneidkopf (13), der Spannuten (15) und einem Nutenauslaufbereich (16) aufweist, mit einer zwischen dem Nutenauslaufbereich (16) und dem Schaft (12) sich erstreckenden Hülse (27), die zumindest einen zwischen dem Hauptkanal (23) und dem Nutenauslauf (16) gebildeten Zuführkanal (30) überdeckt, **dadurch gekennzeichnet, daß** der zumindest eine Zuführkanal (30) im wesentlichen achsparallel zur Längsmittelachse (32) des Schaftes (12) und des Schneidkopfes (13) vorgesehen ist, und der Übergang von dem Hauptkanal (23) zum Zuführkanal (30) besteht aus einem zwischen einem zylindrischen Körper (21) des Schneidkopfes (13) und der Hülse (27) gebildeten Strömungskanal (31), wobei der Endbereich (24) des zylindrischen Körpers (21) ein in den Hauptkanal (23) ragendes freies Ende (33) aufweist, das kegelförmig oder kugelförmig ausgebildet ist und der Übergang von dem Zuführkanal (30) zum Nutenauslaufbereich (16) besteht aus einem der Hülse (27) zugeordneten Auslaufbereich (36) des Strömungskanals (31), wobei der Auslaufbereich (36) unter einem spitzen Winkel zur Mantelfläche des zylindrischen Körpers (21) angeordnet ist oder einen fließenden, vorzugsweise gerundeten Abschnitt zwischen Auslaufbereich (36) und Mantelfläche des zylindrischen Körpers (21) aufweist, so daß beide Übergänge nahezu absatzfrei sind.

2. Rotierendes Schaftwerkzeug nach Anspruch 1, **dadurch gekennzeichnet, daß** zwischen dem Strömungskanal (31) und dem Nutenauslaufbereich (16) ein durch die Hülse (27) gebildeter Ringspalt (28) vorgesehen ist.

3. Rotierendes Schaftwerkzeug nach einem der vorhergehenden Ansprüche, **dadurch gekennzeichnet, daß** der Schneidkopf (13) einen zylindrischen Körper (21) mit einem Endbereich (24) aufweist, in dem wenigstens eine Längsnut (35) vorgesehen ist, die in Verbindung mit dem Schaft (12) einen Strömungskanal (31) bildet.

4. Rotierendes Schaftwerkzeug nach einem der vorhergehenden Ansprüche, **dadurch gekennzeichnet, daß** zwei um vorzugsweise 180° zueinander versetzt angeordnete Längsnuten (35) vorgesehen sind.

5. Rotierendes Schaftwerkzeug nach Anspruch 3 oder 4, **dadurch gekennzeichnet, daß** die Längsnuten (35) im wesentlichen einen V-förmigen Querschnitt aufweisen, deren Schenkel in einem Winkel zwischen 45° und 135° angeordnet sind.

6. Rotierendes Schaftwerkzeug nach einem der Ansprüche 3 oder 4, **dadurch gekennzeichnet, daß** die Längsnuten (35) im wesentlichen einen V-förmigen Querschnitt aufweisen, deren Schenkel in einem Winkel im Bereich von 90° ± 30 % vorgesehen sind.

7. Rotierendes Schaftwerkzeug nach einem der Ansprüche 3 oder 4, **dadurch gekennzeichnet, daß** die Längsnuten (35) im wesentlichen einen V-förmigen Querschnitt aufweisen, deren Schenkel in einem Winkel von in etwa 90° vorgesehen ist.

8. Rotierendes Schaftwerkzeug nach einem der Ansprüche 3 bis 7, **dadurch gekennzeichnet, daß** ein Nutgrund der Längsnut (35) in etwa kreisbogenförmig ausgebildet ist.

9. Rotierendes Schaftwerkzeug nach Anspruch 1, **dadurch gekennzeichnet, daß** der Auslaufbereich (36) des Strömungskanals (31) unmittelbar einem Spanraum (15) zugeordnet ist.

10. Rotierendes Schaftwerkzeug nach Anspruch 1, **dadurch gekennzeichnet, daß** jedem Spanraum (15) ein Strömungskanal (31) zugeordnet ist.

11. Rotierendes Schaftwerkzeug nach einem der vorhergehenden Ansprüche, **dadurch gekennzeichnet, daß** die Hülse (27) einstückig mit dem Schaft (12) ausgebildet ist.

12. Rotierendes Schaftwerkzeug nach einem der vorhergehenden Ansprüche, **dadurch gekennzeichnet, daß** der Schneidkopf (13) zum Schaft (12) kraftund/oder formschlüssig befestigbar ist.

13. Rotierendes Schaftwerkzeug nach Anspruch 1, **dadurch gekennzeichnet, daß** der Schneidkopf (13) zum Schaft (12) durch eine Preßpassung befestigbar ist.

14. Rotierendes Schaftwerkzeug nach Anspruch 1, **dadurch gekennzeichnet, daß** der Schneidkopf (13) zum Schaft (12) stoffschlüssig befestigbar ist.

15. Rotierendes Schaftwerkzeug nach Anspruch 1, **dadurch gekennzeichnet, daß** zwischen Schneidkopf (13) und Schaft (12) eine Klebeverbindung vorgesehen ist.

16. Rotierendes Schaftwerkzeug nach Anspruch 1, **dadurch gekennzeichnet, daß** der Schneidkopf (13) zum Schaft (12) durch Löten, insbesondere Weichoder Hartlöten, verbindbar ist.

17. Rotierendes Schaftwerkzeug nach Anspruch 1, **dadurch gekennzeichnet, daß** der Schaft (12) und die Hülse (27) vor dem Einsetzen des Schneidkopfes (13) auf eine Temperatur zwischen 300° und 800° erhitzbar ist.

18. Rotierendes Schaftwerkzeug nach Anspruch 1, **dadurch gekennzeichnet, daß** in dem Endbereich (24) des zylindrischen Körpers (21) geschliffene Längsnuten (35) vorgesehen sind.

19. Rotierendes Schaftwerkzeug nach Anspruch 1, **dadurch gekennzeichnet, daß** die Hülse (27) und der Schaft (12) kraft- und/oder formschlüssig miteinander verbindbar sind.

20. Rotierendes Schaftwerkzeug nach Anspruch 1, **dadurch gekennzeichnet, daß** die Hülse (27) und der Schaft (12) stoffschlüssig miteinander verbindbar sind.

21. Rotierendes Schaftwerkzeug nach einem der vorhergehenden Ansprüche, **dadurch gekennzeichnet, daß** der Schneidkopf (13) als ein Formkopf aus einem Nicht-Schneidmaterial ausgebildet ist, an dem eingesetzte Schneidplatten vorgesehen sind.

22. Rotierendes Schaftwerkzeug nach einem der vorhergehenden Ansprüche **gekennzeichnet durch** die Verwendung als Reibwerkzeug.

## Claims

1. A rotating shaft tool comprising:
a schaft (12) having at least one main channel (23) for coolant/lubricant extending in a longitudinal direction of said shaft (12),
a cutter head (13) connected to said shaft (12) and having chip grooves (15) and a groove discharge region (16),
a sleeve (27) extending between said groove discharge region (16) and said shaft (12) and covering at least one feed channel (30) formed between said main channel (23) and said groove discharge region (16),
**characterized in that** said at least one feed channel (30) is arranged substantially parallel to a longitudinal middle axis (32) of said shaft (12) and said cutter head (13), and the transition is provided from said main channnel (23) to said feed channel (30) comprising a flow channel (31) which is formed between said cylindrical body (21) of the cutter head (13) and said sleeve (27), wherein
said end region of said cylindrical body (21) having a conical or sherical shaped end region (24) with a free end (33) projecting into said main channel (23) and the transion from said feed channel (30) to said groove discharge region (16) of said flow channel (31) has a discharge region (36) associated with said sleeve (27) and arranged at an acute angle to a lateral surface of said cylindrical body (21) or comprising a region for easy flow preferably of said coolant/lubricant between a discharge region (36) of said flow channel (31) and a lateral surface of said cylindrical body (21), so that both transitions are nearly steppless.

2. The rotating shaft tool according to Claim 1, wherein an angular gap (28) formed by said sleeve (27) is provided between said flow channel (31) and said groove discharge region (16).

3. The rotating shaft tool according to one of the preceeding Claims, wherein said cutter head (13) includes a cylindrical body (21) with an end region (24) having at least one longitudinal groove (35) that forms a flow channel (31) in combination with said shaft body (12).

4. The rotating shaft tool according to one of the preceeding Claims, comprising at least two mutually offset longitudinal grooves (35), which are preferably offset by 180 degrees.

5. The rotating shaft tool according to Claim 3 or 4, wherein said at least one longitudinal groove (35) has a substantially v-shaped cross section and sides arranged at an angle between 45 degrees and 135 degrees.

6. The rotating shaft according to Claim 3 or 4, wherein said at least one longitudinal groove (35) has a substantially v-shaped cross section and sides arranged at an angle in the range of 90 degrees plus or minus 30 percent.

7. The rotating shaft according to Claim 3 or 4, wherein said at least one longitudinal groove (35) has a substantially v-shaped cross section and sides at an angle of about 90 degrees.

8. The rotating shaft according to Claim 3 to 7, wherein said at least one longitudinal groove (35) has a groove floor with a substantially circular arcuat form.

9. The rotating shaft according to Claim 1, wherein said chip grooves (15) are directly associated with said discharge region (36) of said flow channel (31).

10. The rotating shaft according to Claim 1, wherein a flow channel (31) is associated with each chip groove (15).

11. The rotating shaft according to one of the proceeding Claims, wherein said sleeve (27) is integral with said shaft (12).

12. The rotating shaft accordind to one of the proceeding Claims, wherein said cutter head (13) is fastened to said shaft (12) with a positive and/or non-positive connection.

13. The rotating shaft according to Claim 1, wherein said cutter head (13) is fastened to said shaft (12) with a press fit.

14. The rotating shaft according to Claim 1, wherein said cutter head (13) is fastened to said shaft (12) with a material connection.

15. The rotating shaft according to Claim 1, wherein said cutter head (13) is fastened to said shaft (12) with an adhesive connection.

16. The rotating shaft according to Claim 1, wherein said cutter head (13) is fastened to said shaft (12) with a solder connection especially by soft soldering or brazing.

17. The rotating shaft according to Claim 1, wherein said shaft (12) and said sleeve (27) have been heated to a temperature between 300 degrees C and 800 degreees C for insertion of said cutter head (13) into said shaft (12).

18. The rotating shaft according to Claim 1, wherein said cutter head (13) comprises a cylindrical body (21) having an end region (24) including ground longitudinal grooves (35).

19. The rotating shaft according to Claim 1, wherein said sleeve (27) and said shaft (12) are connected together positively and/or non-positively.

20. The rotating shaft according to Claim 1, wherein said sleeve (27) and said shaft (12) are connected together with a material connection.

21. The rotating shaft according to Claim 1, wherein said cutter head (13) comprises a shaped body of non-cutting material having cutter plates inserted thereon.

22. The rotating shaft according to Claim 1, wherein said rotating shaft tool comprises a reaming tool.

## Revendications

1. Outil à tige rotatif avec une tige (12), dans laquelle est prévu au moins un canal principal (23) pour lubrifiant**/réfrigérant** s'étendant dans la direction longitudinale, avec une tête de coupe (13) connectée à la tige (12), qui présente des rainures de serrage (15) et une zone de sortie de rainure (16), avec une douille (27) s'étendant entre la zone de sortie de rainure (16) et la tige (12), qui recouvre au moins un canal d'alimentation (30) formé entre le canal principal (23) et la sortie de rainure (16), **caractérisé en ce que** l'au moins un canal d'alimentation (30) est prévu essentiellement avec son axe parallèle à l'axe médian longitudinal (32) de la tige (12) et de la tête de coupe (13), et la transition du canal principal (23) au canal d'alimentation (30) se compose d'un canal d'écoulement (31) formé entre un corps cylindrique (21) de la tête de coupe (13) et la douille (27), la zone d'extrémité (24) du corps cylindrique (21) présentant une extrémité libre (33) saillant dans le canal principal (23), laquelle est réalisée en forme de cône ou de bille, et la transition du canal d'alimentation (30) à la zone de sortie de rainure (16) se composant d'une zone de sortie (36) du canal d'écoulement (31) associée à la douille (27), la zone de sortie (36) étant disposée à angle aigu par rapport à la surface d'enveloppe du corps cylindrique (21) ou présentant une portion à écoulement librè, de préférence arrondie, entre la zone de sortie (36) et la surface d'enveloppe du corps cylindrique (21), de sorte que les deux transitions soient pratiquement sans retrait.

2. Outil à tige rotatif selon la revendication 1, **caractérisé en ce qu'**il est prévu une fente annulaire (28) formée par la douille (27) entre le canal d'écoulement (31) et la zone de sortie de rainure (16).

3. Outil à tige rotatif selon l'une quelconque des revendications précédentes, **caractérisé en ce que** la tête de coupe (13) présente un corps cylindrique (21) avec une zone d'extrémité (24), dans laquelle est prévue au moins une rainure longitudinale (35), qui forme un canal d'écoulement (31) conjointement avec la tige (12).

4. Outil à tige rotatif selon l'une quelconque des revendications précédentes, **caractérisé en ce qu'**il est prévu deux rainures longitudinales (35) décalées de préférence de 180° l'une par rapport à l'autre.

5. Outil à tige rotatif selon la revendication 3 ou 4, **caractérisé en ce que** les rainures longitudinales (35) présentent essentiellement une section transversale en V, dont les branches sont disposées suivant un angle compris entre 45° et 135°.

6. Outil à tige rotatif selon l'une quelconque des revendications 3 ou 4, **caractérisé en ce que** les rainures longitudinales (35) présentent essentiellement une section transversale en V, dont les branches sont prévues à un angle dans la gamme de 90° ± 30%.

7. Outil à tige rotatif selon l'une quelconque des revendications 3 ou 4, **caractérisé en ce que** les rainures longitudinales (35) présentent essentiellement une section transversale en V, dont les branches sont prévues à un angle d'environ 90°.

8. Outil à tige rotatif selon l'une quelconque des revendications 3 à 7, **caractérisé en ce qu'**un fond de rainure de la rainure longitudinale (35) est réalisé approximativement en forme d'arc de cercle.

9. Outil à tige rotatif selon la revendication 1, **caractérisé en ce que** la zone de sortie (36) du canal d'écoulement (31) est directement associée à un espace de serrage (15).

10. Outil à tige rotatif selon la revendication 1, **caractérisé en ce qu'**un canal d'écoulement (31) est associé à chaque espace de serrage (15).

11. Outil à tige rotatif selon l'une quelconque des revendications précédentes, **caractérisé en ce que** la douille (27) est réalisée d'une pièce avec la tige (12).

12. Outil à tige rotatif selon l'une quelconque des revendications précédentes, **caractérisé en ce que** la tête de coupe (13) peut être fixée à la tige (12) par force et/ou par engagement positif.

13. Outil à tige rotatif selon la revendication 1, **caractérisé en ce que** la tête de coupe (13) peut être fixée à la tige (12) par un ajustement serré.

14. Outil à tige rotatif selon la revendication 1, **caractérisé en ce que** la tête de coupe (13) peut être fixée à la tige (12) par liaison de matière.

15. Outil à tige rotatif selon la revendication 1, **caractérisé en ce qu'**il est prévu entre la tête de coupe (13) et la tige (12) une liaison par collage.

16. Outil à tige rotatif selon la revendication 1, **caractérisé en ce que** la tête de coupe (13) peut être connectée à la tige (12) par soudage, en particulier brasage tendre ou brasage fort.

17. Outil à tige rotatif selon la revendication 1, **caractérisé en ce que** la tige (12) et la douille (27) peuvent être chauffées avant l'utilisation de la tête de coupe (13) à une température comprise entre 300° et 800°.

18. Outil à tige rotatif selon la revendication 1, **caractérisé en ce qu'**il est prévu dans la zone d'extrémité (24) du corps cylindrique (21) des rainures longitudinales meulées (35).

19. Outil à tige rotatif selon la revendication 1, **caractérisé en ce que** la douille (27) et la tige (12) peuvent être connectées l'une à l'autre par force et/ou par engagement positif.

20. Outil à tige rotatif selon la revendication 1, **caractérisé en ce que** la douille (27) et la tige (12) peuvent être connectées l'une à l'autre par liaison de matière.

21. Outil à tige rotatif selon l'une quelconque des revendications précédentes, **caractérisé en ce que** la tête de coupe (13) est réalisée en tant que tête moulée en un matériau non coupant, sur laquelle sont prévues des matrices de coupe insérées.

22. Outil à tige rotatif selon l'une quelconque des revendications précédentes, **caractérisé par** son utilisation en tant qu'outil d'alésage.
